# EUROPEAN PATENT APPLICATION

(11) **EP 4 675 795 A1**
(43) Date of publication of application: **07.01.2026**
(21) Application number: 23945600.7
(22) Date of filing: 09.10.2023
(51) Int. Cl.: H01M 50/244

(54) **BATTERY AND ELECTRIC DEVICE**

(30) Priority: 20.07.2023 CN 202321914157 U
(71) Applicant: Contemporary Amperex Technology Co., Limited, Ningde, Fujian 352100 (CN)
(72) Inventor: LI, Honglei, Ningde, Fujian 352100 (CN); LUO, Hao, Ningde, Fujian 352100 (CN); ZHANG, Yanming, Ningde, Fujian 352100 (CN); WU, Weijie, Ningde, Fujian 352100 (CN)
(74) Representative: Kraus & Lederer PartGmbB
(86) International application number: PCT/CN2023/123572
(87) International publication number: WO 2025/015719

(57) **Abstract**

A battery (100) and a power consuming apparatus (1000). The battery (100) includes a box (20), a battery cell (10), and a protective component (30). The box (20) includes a first wall (21) and a support assembly (22). The battery cell (10) is accommodated in the box (20), and a side of the battery cell (10) facing the first wall (21) is provided with a pressure relief mechanism (105). The protective component (30) is accommodated in the box (20) and separates the pressure relief mechanism (105) from the first wall (21). In an arrangement direction, at least part of the support assembly (22) is located between the first wall (21) and the protective component (30).

## Description

### CROSS-REFERENCE TO RELATED APPLICATIONS

The present application claims priority to Chinese Patent Application No. 202321914157.6, filed on July 20, 2023 and entitled "BATTERY AND POWER CONSUMING APPARATUS", which is incorporated herein by reference in its entirety.

### TECHNICAL FIELD

The present application relates to the technical field of battery production, and in particular, to a battery and a power consuming apparatus.

### BACKGROUND

Battery cells are widely used in electronic devices, such as mobile phones, laptops, battery vehicles, electric vehicles, electric airplanes, electric ships, electric toy cars, electric toy ships, electric toy airplanes, and electric tools. The battery cell may include a cadmium-nickel battery cell, a hydrogen-nickel battery cell, a lithium-ion battery cell, a secondary alkaline zinc-manganese battery cell, and the like.

During the development of battery technologies, in addition to improving the functional performance of the battery, the reliability problem is also a non-negligible problem. Therefore, how to improve the reliability of batteries is an urgent technical problem to be solved in battery technologies.

### SUMMARY

The present application provides a battery and a power consuming apparatus to improve the reliability of batteries.

In a first aspect, the present application provides a battery. The battery includes a box, a battery cell, and a protective component. The box includes a first wall and a support assembly. The battery cell is accommodated in the box, and a side of the battery cell facing the first wall is provided with a pressure relief mechanism. The protective component is accommodated in the box and separates the pressure relief mechanism from the first wall. In an arrangement direction, at least part of the support assembly is located between the first wall and the protective component.

According to the battery provided in the present application, high-temperature and high-speed emissions released by the battery cell during thermal runaway act on the protective component, and the protective component can reduce the thermal impact on the first wall and reduce the heat transferred to the first wall, thereby reducing the risk that the first wall is fused through. At least part of the support assembly is located between the first wall and the protective component, so that a thermal insulation air layer is formed between the first wall and the protective component, thereby further reducing the heat transferred to the first wall. When thermal runaway occurs, the protective component impacted by the high-temperature and high-speed emissions is supported by the support assembly, thereby reducing the direct contact between the first wall and the protective component. Although the protective component is in contact with the support assembly to generate fusion, the support assembly gradually fuses in a direction from the protective component to the first wall, thereby delaying the time taken to transfer heat to the first wall, reducing the risk that the box is fused through, and improving the reliability of the battery.

According to an example of the present application, the support assembly and the first wall are integrally formed, and the support assembly protrudes from a surface of the first wall facing the protective component.

In these optional examples, by this arrangement, the support assembly and the first wall have relatively high connection strength, and the support assembly and the first wall are not likely to fall off when the two are subjected to an external force.

According to an example of the present application, in an arrangement direction, at least part of the support assembly is overlapped with the pressure relief mechanism.

In these optional examples, when thermal runaway occurs, the high-temperature and high-speed emissions are discharged by the pressure relief mechanism. Therefore, at least part of the support assembly is overlapped with the pressure relief mechanism to reduce the high-temperature and high-speed emissions from directly impacting the first wall, thereby reducing the risk that the first wall is fused through.

According to an example of the present application, the support assembly and the protective component are arranged at an interval in an arrangement direction.

In these optional examples, by this arrangement, when thermal runaway occurs, the protective component impacted by the high-temperature and high-speed emissions is also supported by the support assembly. On the premise that requirements for thermal protection are taken into consideration, the size of the support assembly can be appropriately reduced, thereby being conducive to reducing the loss of the energy density of the battery.

According to an example of the present application, the support assembly includes a plurality of first support elements.

According to an example of the present application, at least two first support elements are arranged in a cross manner. In an arrangement direction, the cross position of the two first support elements is overlapped with the pressure relief mechanism.

In these optional examples, by this arrangement, the density of the support assembly in a region corresponding to the pressure relief mechanism can be increased, thereby reducing the probability that the protective component is in contact with the first wall, and also delaying the transfer of heat. In addition, the cross arrangement can bear relatively large thermal impact, increase the support strength for the pressure relief mechanism, and reduce the risk that the protective component is impacted through, thereby reducing the risk that the box is fused through.

According to an example of the present application, the support assembly further includes a second support unit. The second support unit is arranged on a circumferential side of the cross position. In an arrangement direction, the second support unit is at least partially overlapped with the pressure relief mechanism.

In these optional examples, by this arrangement, the support strength for the protective component can be further increased, thereby reducing the risk that the protective component is impacted through.

According to an example of the present application, the second support unit includes two second support elements and two third support elements. Each second support element is connected to two adjacent third support elements. The two second support elements are spaced and oppositely arranged along a first direction. The first direction is perpendicular to the arrangement direction.

In these optional examples, the second support element is connected to the third support element. When the protective component is subjected to thermal impact, the protective component is in contact with the second support element and the third support element, the second support element may disperse the impact force applied to the second support element to the third support element, and the third support element may disperse the impact force applied to the third support element to the second support element, thereby reducing the risk that the protective component is impacted through. In addition, the heat is transferred correlatively between the second support element and the third support element to delay the time for transferring the heat to the first wall, thereby reducing the risk that the box is fused through.

According to an example of the present application, the support assembly is connected to the protective component.

In these optional examples, by this arrangement, the mounting stability of the protective component is improved, and the movement of the protective component in the box is reduced.

According to an example of the present application, a projection area S1 of the protective component on the first wall along the arrangement direction and an area S2 of the first wall satisfy: 60%S2≤S1≤95%S2.

In these optional examples, by this arrangement, thermal protection of the first wall by the protective component can be further improved.

According to an example of the present application, the protective component includes one of a mica paper, a mica plate, or a glass fiber plate.

In these optional examples, these specific optional protective components can endow the protective component with good thermal protection performance.

In a second aspect, the present application provides a power consuming apparatus. The power consuming apparatus includes the foregoing battery, and the battery is configured to provide electric energy.

The foregoing description only refers to an overview of the technical solution of the present application. In order to understand the technical means of the present application more clearly, it can be implemented according to the contents of the specification. In addition, in order to make the foregoing and other purposes, features, and advantages of the present application more apparent, the specific embodiments of the present application are listed below.

### BRIEF DESCRIPTION OF THE DRAWINGS

The features, advantages, and technical effects of the exemplary examples of the present application are described below with reference to the accompanying drawings.
FIG. 1 is a schematic structural diagram of a vehicle according to some examples of the present application;
FIG. 2 is a schematic exploded structural diagram of a battery according to some examples of the present application;
FIG. 3 is a schematic structural diagram of a battery according to some examples of the present application;
FIG. 4 is a schematic exploded structural diagram of a battery according to some other examples of the present application;
FIG. 5 is a schematic exploded structural diagram of a battery cell of a battery according to some examples of the present application;
FIG. 6 is a top view of a battery according to some examples of the present application;
FIG. 7 is a schematic diagram of a cross-sectional structure of a battery taken along line A-A according to some examples shown in FIG. 6;
FIG. 8 is a schematic diagram of a cross-sectional structure of a battery taken along line B-B according to some examples shown in FIG. 6; and
FIG. 9 is a partial bottom view of a battery according to some examples of the present application.

The accompanying drawings are not necessarily drawn to actual scale.

Description of reference numerals:
1000 - vehicle; 100 - battery; 200- controller; 300 - motor;
10 - battery cell; 101 - case; 102 - end cover; 103 - electrode assembly; 104 - electrode terminal; 105 - pressure relief mechanism; 20 - box; 20a - first box part; 20b - second box part; 21 - first wall; 22 - support assembly; 221 - first support element; 221a - cross position; 222 - second support unit; 2221 - second support element; 2222 - third support element; 30 - protective component; arrangement direction x; and first direction y.

### DETAILED DESCRIPTION

In order to make the objectives, technical solutions, and advantages of the examples of the present application clearer, the technical solutions in the examples of the present application will be clearly described below with reference to the accompanying drawings in the examples of the present application. Apparently, the described examples are merely some examples of the present application rather than all of the examples. All other examples obtained by those of ordinary skill in the art based on the examples in the present application without any creative effort shall fall within the scope of protection of the present application.

Unless otherwise defined, all technical and scientific terms used in the present application have the same meanings as commonly understood by those skilled in the art of the present application. The terms used in the specification of the present application are only for the purpose of describing specific examples, but are not intended to limit the present application. The terms "include" and "have" and any variants thereof in the specification and claims of the present application and in the description of the accompanying drawings are intended to cover non-exclusive inclusion. The terms "first", "second", and the like in the specification and claims of the present application or the foregoing accompanying drawings are used to distinguish different objects, rather than to describe a specific order or primary-secondary relationship.

The reference to "examples" in the present application means that specific features, structures, or characteristics described with reference to examples may be included in at least one example of the present application. The appearance of this phrase in various places in the specification does not necessarily refer to the same example, nor is it a separate or alternative example that is mutually exclusive with other examples.

In the description of the present application, it should be noted that, unless otherwise explicitly specified and defined, the terms such as "mount", "connect", "connection", and "attachment" should be understood in a broad sense. For example, the connection may be a fixed connection, a detachable connection, or an integrated connection; or the connection may be a direct connection, an indirect connection through an intermediate medium or an internal communication between two elements. For those of ordinary skill in the art, the specific meanings of the foregoing terms in the present application can be understood according to specific situations.

In the present application, the term "and/or" only describes an association relationship between associated objects and represents that three relationships may exist. For example, A and/or B may represent the following three cases: only A exists, both A and B exist, and only B exists. In addition, the character "/" in the present application generally means that the associated objects before and after it are in an "or" relationship.

In the examples of the present application, the same reference numerals represent the same parts, and for the sake of brevity, detailed descriptions of the same parts are omitted in different examples. It should be understood that the thickness, length, width, and other dimensions of various parts in the examples of the present application shown in the accompanying drawings, as well as the overall thickness, length, width, and other dimensions of an integrated apparatus are for illustrative purposes only, and should not constitute any limitation to the present application.

The term "a plurality of" in the present application refers to two or more (including two).

In the present application, the battery cell may include a lithium-ion battery cell, a lithium-sulfur battery cell, a sodium/lithium-ion battery cell, a sodium-ion battery cell, a magnesium-ion battery cell, or the like, which is not limited in the examples of the present application. The battery cell may be in a cylindrical shape, a flat shape, a cuboid shape, or other shapes, which is also not limited in the examples of the present application.

The battery mentioned in the examples of the present application refers to a single physical module including one or more battery cells to provide a higher voltage and capacity. The battery generally includes a box for encapsulating one or more battery cells. The box can prevent liquids or other foreign matters from affecting the charging or discharging of the battery cell.

The development of a battery technology needs to simultaneously consider various design factors, for example, performance parameters such as an energy density, a cycle life, a discharging capacity, and a charging and discharging rate. In addition, the safety of a battery also needs to be considered.

A pressure relief mechanism on a battery cell has an important impact on the safety of the battery cell. For example, when phenomena such as a short circuit and overcharging occur, thermal runaway may occur inside the battery cell, thereby causing a pressure rise. In this case, the internal pressure may be released outward by means of actuation of the pressure relief mechanism to prevent the battery cell from exploding and starting a fire.

The pressure relief mechanism may be an element or a part that is actuated when the battery cell reaches a certain condition. Exemplarily, the pressure relief mechanism may be an element or a part that is actuated when the internal pressure or internal temperature of the battery cell reaches a predetermined threshold to release the internal pressure and/or internal substances. The threshold design varies according to different design requirements. The threshold may depend on the material of one or a plurality of a positive electrode plate, a negative electrode plate, an electrolyte solution, and a spacer in the battery cell.

The pressure relief mechanism may take the form of an explosion-proof valve, a gas valve, a pressure relief valve, or a safety valve, and may specifically adopt a pressure-sensitive element or structure. That is, when the internal pressure of the battery cell reaches a predetermined threshold, the pressure relief mechanism performs an action or a weak region provided in the pressure relief mechanism breaks, so as to form a pressure relief hole for releasing the internal pressure. Alternatively, the pressure relief mechanism may also adopt a temperature-sensitive element or structure. That is, when the internal temperature of the battery cell reaches a predetermined threshold, the pressure relief mechanism performs an action, so as to form a pressure relief hole for releasing the internal pressure. Alternatively, the pressure relief mechanism may also be a part that can be actively actuated. Exemplarily, the pressure relief mechanism may be actuated when a control signal of a battery is received.

The pressure relief mechanism may also adopt another form. Exemplarily, the pressure relief mechanism may be of a structure with relatively low strength on a shell of the battery cell. During thermal runaway of the battery cell, the structure with relatively low strength cracks or deforms, so as to form a pressure relief hole for releasing the internal pressure. For example, the pressure relief mechanism may be a welding mark on the shell of the battery cell.

"Actuate" mentioned in the present application refers to that the pressure relief mechanism generates an action or is activated to a certain state, so that the internal pressure and/or internal substances of the battery cell can be released. The action generated by the pressure relief mechanism may include, but is not limited to: at least part of the pressure relief mechanism is cracked, crushed, torn, opened, or the like. When the pressure relief mechanism is actuated, high-temperature and high-speed substances inside the battery cell are discharged as emissions outward from the actuated part. In this manner, it is possible to enable the battery cell to undergo pressure relief at a controllable pressure, thereby avoiding the occurrence of potential and more serious accidents.

The emissions from the battery cell mentioned in the present application include, but are not limited to: an electrolyte solution, positive and negative electrode plates that are dissolved or split, fragments of a spacer, high-temperature and high-speed gases generated by reaction, flames, and the like.

In some examples, during thermal runaway of the battery cell, the battery cell releases the emissions into the box. The emissions released by the battery cell are in a high-temperature and high-speed state. If the emissions impact the box, the risk that the box is fused through is caused, especially in a part of the box corresponding to the pressure relief mechanism of the battery cell. Consequently, the risk of a fire starting outside the battery is caused, and the reliability of the battery is reduced. The foregoing statement is merely intended to provide background information related to the present application, and does not necessarily constitute the prior art.

In view of the foregoing problems, the inventor performs intense researches and provides a battery of a battery. High-temperature and high-speed emissions released by the battery cell during thermal runaway act on the protective component, and the protective component can reduce the thermal impact on the first wall and reduce the heat transferred to the first wall, thereby reducing the risk that the first wall is fused through. At least part of the support assembly is located between the first wall and the protective component, so that a thermal insulation air layer is formed between the first wall and the protective component, thereby further reducing the heat transferred to the first wall. When thermal runaway occurs, the protective component impacted by the high-temperature and high-speed emissions is supported by the support assembly, thereby reducing the direct contact between the first wall and the protective component. Although the protective component is in contact with the support assembly to generate fusion, the support assembly gradually fuses in a direction from the protective component to the first wall, thereby delaying the time taken to transfer heat to the first wall, reducing the risk that the box is fused through, and improving the reliability of the battery.

The battery may be applied to a vehicle, a mobile phone, a portable device, a laptop, a ship, a spacecraft, an electric toy, an electric tool, and the like. The vehicle may be a fuel vehicle, a gas vehicle, or a new energy vehicles. The new energy vehicle may be an all-electric vehicle, a hybrid electric vehicle, an extended range electric vehicle, or the like. The spacecraft includes an airplane, a rocket, a space shuttle, a spaceship, and the like. The electric toy includes a fixed or mobile electric toy, such as a game console, an electric vehicle toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screw driver, an electric hammer, an electric impact drill, a concrete vibrator, and an electric planer. The foregoing power consuming apparatus is not specifically limited in the examples of the present application.

For convenience of description, the following examples are illustrated by taking an example in which a power consuming apparatus according to an example of the present application is a vehicle 1000.

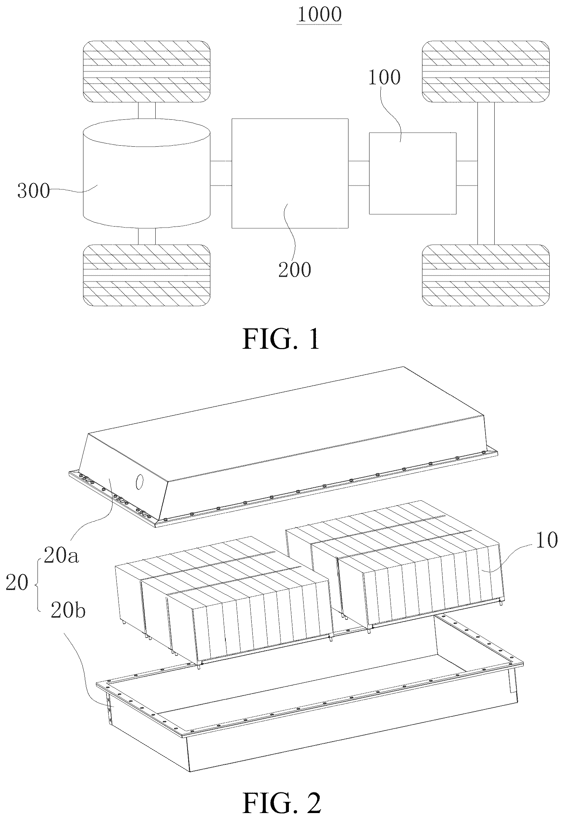

Referring to FIG. 1, FIG. 1 is a schematic structural diagram of a vehicle 1000 according to some examples of the present application. The vehicle 1000 may be a fuel vehicle, a gas vehicle, or a new energy vehicle. The new energy vehicle may be an all-electric vehicle, a hybrid electric vehicle, an extended range electric vehicle, or the like. A battery 100 is arranged inside the vehicle 1000. The battery 100 may be arranged at the bottom, head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some examples of the present application, the battery 100 not only may serve as an operating power source of the vehicle 1000, but also may serve as a driving power source of the vehicle 1000, thus replacing or partially replacing fuel or natural gas to provide driving power for the vehicle 1000.

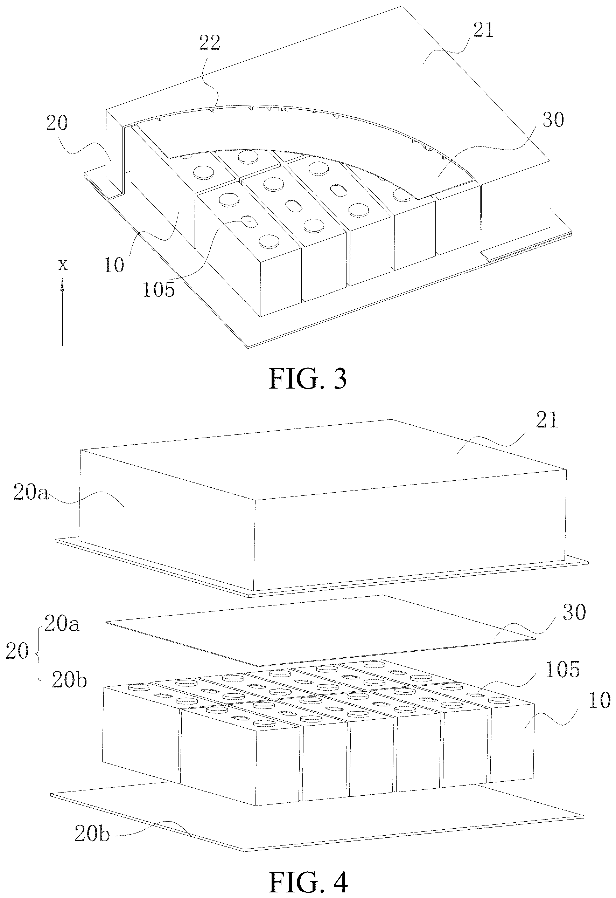

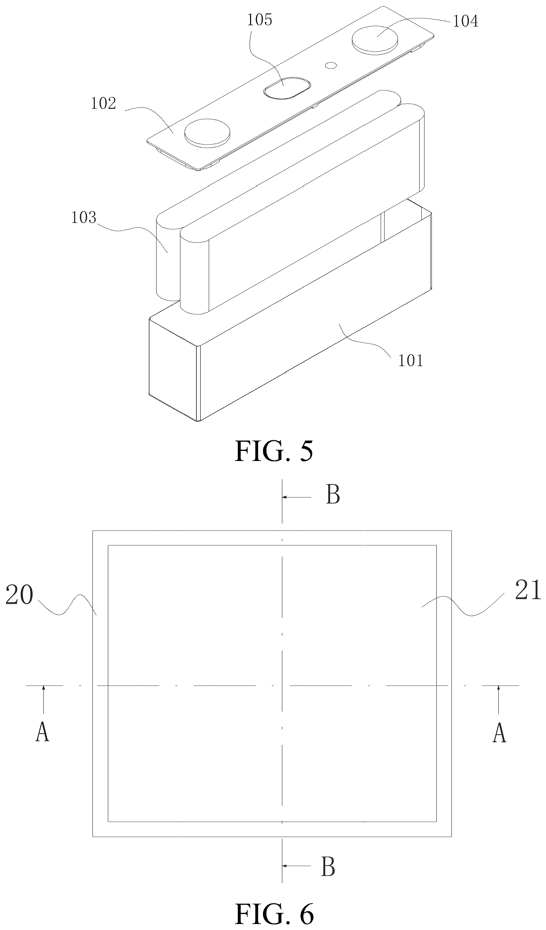

Referring to FIG. 2 and FIG. 5, FIG. 2 is a schematic exploded structural diagram of a battery according to some examples of the present application; FIG. 3 is a schematic structural diagram of a battery according to some examples of the present application; FIG. 4 is a schematic exploded structural diagram of a battery according to some other examples of the present application; and FIG. 5 is a schematic exploded structural diagram of a battery cell of a battery according to some examples of the present application.

In a first aspect, as shown in FIG. 2 to FIG. 5, the present application provides a battery. The battery includes a box 20, a battery cell 10, and a protective component 30. The box 20 includes a first wall 21 and a support assembly 22. The battery cell 10 is accommodated in the box 20, and a side of the battery cell 10 facing the first wall 21 is provided with a pressure relief mechanism 105. The protective component 30 is accommodated in the box 20 and separates the pressure relief mechanism 105 from the first wall 21. In an arrangement direction x of the first wall 21 and the protective component 30, at least part of the support assembly 22 is located between the first wall 21 and the protective component 30.

The box 20 can prevent liquids or other foreign matters from affecting the charging or discharging of the battery cell 10 to some extent. As shown in FIG. 2, the box 20 may include a first box part 20a and a second box part 20b. The first box part 20a and the second box part 20b are covered to each other. The first box part 20a and the second box part 20b jointly define an accommodating space for accommodating the battery cell 10. The first box part 20a may be of a hollow structure with an opening at one end. The second box part 20b may be of a plate-shaped structure. The second box part 20b covers the open side of the first box part 20a, so that the first box part 20a and the second box part 20b jointly define an accommodating space. The first box part 20a and the second box part 20b may both be of a hollow structure having an open side, and the open side of the first box part 20a covers the open side of the second box part 20b. Certainly, the box 20 formed by the first box part 20a and the second box part 20b may be in various shapes, such as a cylinder and a cuboid. Certainly, the first box part 20a and the second box part 20b may be in various shapes, such as a cylinder and a cuboid. In order to increase the sealing performance after connection between the first box part 20a and the second box part 20b, a sealing member, such as a sealant, a sealing ring, or the like, may also be arranged between the first box part 20a and the second box part 20b. Assuming that the first box part 20a covers the top of the second box part 20b, the first box part 20a may also be referred to as an upper box cover, and the second box part 20b may also be referred to as a lower box.

In the battery, a plurality of battery cells 10 may be provided, and the plurality of battery cells 10 may be connected in series, parallel, or series and parallel. The series and parallel connection refers to both series connection and parallel connection among the plurality of battery cells 10. The plurality of battery cells 10 may be directly connected in series, parallel, or series and parallel together, and then, the whole formed by the plurality of battery cells 10 is accommodated in the box 20. Certainly, the battery may also be in the form of a battery module composed of a plurality of battery cells 10 in series, parallel, or series and parallel first, and then, a plurality of battery modules are connected in series, parallel, or series and parallel to form a whole which is accommodated in the box 20. The battery may further include other structures. For example, the battery may further include a bus part for realizing electrical connection between a plurality of battery cells 10.

As shown in FIG. 5, in an example of the present application, the battery cell 10 refers to the smallest unit constituting a battery. The battery cell 10 includes a pressure relief mechanism 105. The battery cell 10 may further include a case 101, an end cover 102, an electrode assembly 103, an electrode terminal 104, and other functional parts. The end cover 102 refers to a part that covers an opening of the case 101 to isolate the internal environment of the battery cell 10 from the external environment. The end cover 102 is provided with a pressure relief mechanism 105 for releasing the internal pressure when the internal pressure or temperature of the battery cell 10 reaches a threshold.

As shown in FIG. 3 and FIG. 4, in this example of the present application, the box 20 includes a first wall 21, and the first wall 21 and the pressure relief mechanism 105 are correspondingly arranged at an interval. Specifically, the first wall 21 of the box 20 is a wall of the box 20 opposite to the pressure relief mechanism 105 in an axial direction. The first wall 21 may be a top wall of the box 20 located on an upper side of the battery cell 10, may be a bottom wall of the box 20 located on a lower side of the battery cell 10, or may be a side wall of the box 20 located on a side of the battery cell 10. Certainly, the first wall 21 may also be a wall of the box 20 located at another position. Exemplarily, the first wall 21 may be part of the first box part 20a, or may be part of the second box part 20b.

In this example of the present application, the shape of the first wall 21 is not limited. Exemplarily, the first wall 21 may have a flat plate shape, a curved plate shape, or another shape.

In this example of the present application, the box 20 includes a support assembly 22. In the arrangement direction x, at least part of the support assembly 22 is located between the first wall 21 and the protective component 30. It may be understood that the entire support assembly 22 may be located between the first wall 21 and the protective component 30, or only part of the support assembly 22 may be located between the first wall 21 and the protective component 30.

In this example of the present application, the support assembly 22 is configured to block the protective component 30 from being in direct contact with the first wall 21. Even if the protective component 30 is impacted by high-temperature and high-speed emissions to move, the support assembly 22 can also block the protective component 30 from being in direct contact with the first wall 21. Specifically, the support assembly 22 may adopt a support element such as a support bar, a support plate, or a support block.

The protective component 30 is configured to separate the pressure relief mechanism 105 from the first wall 21. During thermal runaway of the battery cell 10, the protective component 30 can prevent high-temperature and high-speed substances ejected by the pressure relief mechanism 105 from directly impacting the first wall 21.

Optionally, the thermal impact resistance of the protective component 30 is better than the thermal impact resistance of the first wall 21. The thermal impact resistance refers to a capability of a material to bear a sharp change in temperature without being damaged. When being impacted by the same high-temperature and high-speed substances, the protective component 30 is less likely to be broken compared with the first wall 21.

In this example of the present application, the protective component 30 may be of a plate-shaped structure, a frame structure, or another structure. The protective component 30 may be of an integrated structure, or may be of a structure formed by assembling a plurality of subparts.

In this example of the present application, the protective component 30 may be directly placed on the battery cell 10, that is, the protective component 30 is connected to the battery cell 10. In this case, the support assembly 22 may be connected to the protective component 30, or the support assembly 22 and the protective component 30 may be arranged at an interval.

In some examples, the protective component 30 is connected to the first wall 21 through the support assembly 22. In this case, the protective component 30 may be connected to the battery cell 10, or the protective component 30 and the battery cell 10 may be arranged at an interval.

According to the battery provided in the present application, high-temperature and high-speed emissions released by the battery cell 10 during thermal runaway act on the protective component 30, and the protective component 30 can reduce the thermal impact on the first wall 21 and reduce the heat transferred to the first wall 21, thereby reducing the risk that the first wall 21 is fused through. At least part of the support assembly 22 is located between the first wall 21 and the protective component 30, so that a thermal insulation air layer is formed between the first wall 21 and the protective component 30, thereby further reducing the heat transferred to the first wall 21. When thermal runaway occurs, the protective component 30 impacted by the high-temperature and high-speed emissions is supported by the support assembly 22, thereby reducing the direct contact between the first wall 21 and the protective component 30. Although the protective component 30 is in contact with the support assembly 22 to generate fusion, the support assembly 22 gradually fuses in a direction from the protective component 30 to the first wall 21, thereby delaying the time taken to transfer heat to the first wall 21, reducing the risk that the box 20 is fused through, and improving the reliability of the battery.

According to an example of the present application, further referring to FIG. 5, without limitation, the shape of the end cover 102 may be adapted to the shape of the case 101 to fit the case 101. Optionally, the end cover 102 may be made of a material with certain hardness and strength (for example, aluminum alloy). In this way, the end cover 102 is less likely to deform under extrusion and collision, so that the battery cell 10 can have higher structural strength, and the reliability can also be improved. Functional parts such as electrode terminals 104 may be arranged on the end cover 102. The electrode terminal 104 may be electrically connected to the electrode assembly 103 to output or input the electric energy of the battery cell 10.

The case 101 is an assembly configured to form an internal environment of the battery cell 10 together with the end cover 102. The formed internal environment may be configured to accommodate the electrode assembly 103, an electrolyte solution, and other parts. The case 101 and the end cover 102 may be separate parts. An opening may be provided in the case 101. The end cover 102 covers the opening to form the internal environment of the battery cell 10. Without limitation, the end cover 102 and the case 101 may also be integrated. Specifically, the end cover 102 and the case 101 may form a common connection surface before other parts are arranged inside the case. When the inside of the case 101 needs to be encapsulated, the end cover 102 covers the case 101. The case 101 may be of various shapes and sizes, such as a cuboid shape, a cylindrical shape, and a hexagonal prism shape. Specifically, the shape of the case 101 may be determined according to a specific shape and size of an electrode assembly 103. The case 101 may be made of various materials, such as copper, iron, aluminum, stainless steel, aluminum alloy, and plastic, which are not particularly limited in this example of the present application. The end cover 102 may also be made of various materials, such as copper, iron, aluminum, stainless steel, aluminum alloy, and plastic, which are not particularly limited in this example of the present application. In some examples, an insulating component may also be arranged on an inner side of the end cover 102. The insulating component can be configured to isolate electrical connection parts in the case 101 from the end cover 102, thereby reducing the risk of short circuit. Exemplarily, the insulating component may be made of plastic, rubber, or the like.

The electrode assembly 103 is a part in the battery cell 10 that undergoes electrochemical reactions. The case 101 may include one or more electrode assemblies 103. The electrode assembly 103 is mainly formed by winding a positive electrode plate and a negative electrode plate, and a separator is generally arranged between the positive electrode plate and the negative electrode plate. Parts of the positive electrode plate and the negative electrode plate with active substances constitute a main body of the electrode assembly 103, and parts of the positive electrode plate and the negative electrode plate without active substances respectively constitute a tab. The positive electrode tab and the negative electrode tab may be located at one end of the main body together or at two ends of the main body respectively. During charging and discharging of the battery, a positive electrode active substance and a negative electrode active substance react with an electrolyte solution, and the tabs are connected to the electrode terminals 104 to form a current loop.

The positive electrode plate and the negative electrode plate are wound around a winding axis to form a wound structure. In the wound structure, the positive electrode plate and the negative electrode plate are arranged in a superposed manner along a direction perpendicular to the winding axis. In other words, the positive electrode plate and the negative electrode plate are wound into a plurality of circles along the winding direction. The winding direction is a direction in which the positive electrode plate and the negative electrode plate are wound from inside to outside in a circumferential direction. After the wound structure is unfolded, the positive electrode plate and the negative electrode plate are basically in the shape of a long strip.

According to an example of the present application, as shown in FIG. 3 and FIG. 4, the support assembly 22 and the first wall 21 are integrally formed, and the support assembly 22 protrudes from a surface of the first wall 21 facing the protective component 30.

In this example of the present application, as shown in FIG. 3 and FIG. 4, the first box part 20a may be of a hollow structure with an opening at one end. The second box part 20b may be of a plate-shaped structure. The second box part 20b covers the open side of the first box part 20a, so that the first box part 20a and the second box part 20b jointly define an accommodating space.

In this example of the present application, the support assembly 22 and the first wall 21 are integrally formed as a whole, so that the support assembly 22 and the first wall 21 have relatively high connection strength, and the support assembly 22 and the first wall 21 are not likely to fall off when the two are subjected to an impact. The support assembly 22 protrudes from the first wall 21 and faces the protective component 30. A projection of the support assembly 22 on the first wall 21 along the arrangement direction x is at least partially overlapped with a projection of the protective component 30 on the first wall 21 along the arrangement direction x.

Optionally, the projection of the support assembly 22 on the first wall 21 along the arrangement direction x falls within the projection of the protective component 30 on the first wall 21 along the arrangement direction x.

In this example of the present application, at least part of the protective component 30 is overlapped with the pressure relief mechanism 105 in the arrangement direction x, which may be understood as that the protective component 30 includes a covering portion and a non-covering portion, the covering portion is connected to the non-covering portion, and the covering portion is arranged corresponding to the pressure relief mechanism 105 in the arrangement direction x. Alternatively, the protective component 30 is a covering portion, and in the arrangement direction x, the covering portion is arranged corresponding to the pressure relief mechanism 105.

Exemplarily, the battery includes a plurality of battery cells 10. Each battery cell 10 is provided with a pressure relief mechanism 105. The protective component 30 includes a non-covering portion and a plurality of covering portions. The plurality of covering portions are connected through the non-covering portion. In the arrangement direction x, each covering portion is arranged corresponding to each pressure relief mechanism 105.

Exemplarily, the battery includes a plurality of battery cells 10. Each battery cell 10 is provided with a pressure relief mechanism 105. The protective component 30 includes a plurality of covering portions. The covering portions are connected to the first wall 21 through the support assembly 22. Each covering portion is arranged corresponding to each pressure relief mechanism 105 in the arrangement direction x.

In this example of the present application, the support assembly 22 and the first wall 21 are integrally formed. The forming manner of the support assembly 22 and the first wall 21 is not limited in this example of the present application.

Optionally, the support assembly 22 and the first wall 21 are integrally stamped and formed. The structure of the first wall 21 of the connection portion is affected less in the stamping and forming process. Alternatively, the support assembly 22 and the first wall 21 are formed by vacuum die casting.

In these optional examples, the support assembly 22 and the first wall 21 are integrated. By this arrangement, the support assembly 22 and the first wall 21 have relatively high connection strength, and the support assembly 22 and the first wall 21 are not likely to fall off when the two are subjected to an external force.

According to an example of the present application, in the arrangement direction x, at least part of the support assembly 22 is overlapped with the pressure relief mechanism 105.

In these optional examples, when thermal runaway occurs, the high-temperature and high-speed emissions are discharged by the pressure relief mechanism 105. Therefore, at least part of the support assembly 22 is overlapped with the pressure relief mechanism 105 to reduce the high-temperature and high-speed emissions from directly impacting the first wall 21, thereby reducing the risk that the first wall 21 is fused through.

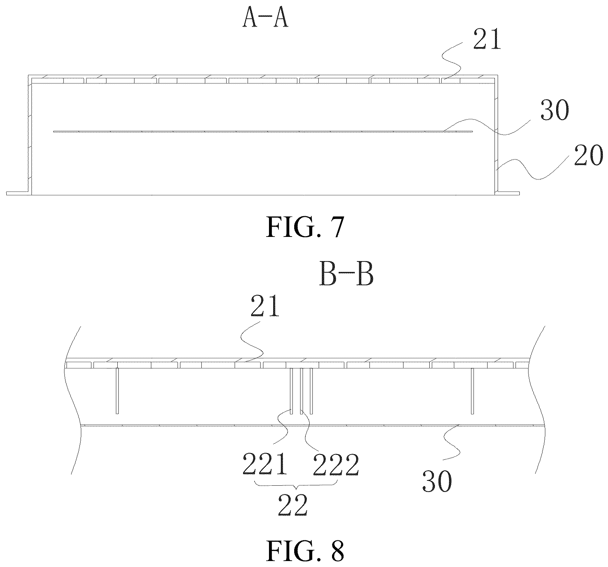

Referring to FIG. 6 to FIG. 8, FIG. 6 is a top view of a battery according to some examples of the present application; FIG. 7 is a schematic diagram of a cross-sectional structure of a battery taken along line A-A according to some examples shown in FIG. 6; and FIG. 8 is a schematic diagram of a cross-sectional structure of a battery taken along line B-B according to some examples shown in FIG. 6.

According to an example of the present application, as shown in FIG. 6 to FIG. 8, the support assembly 22 and the protective component 30 are arranged at an interval in the arrangement direction x.

In this example of the present application, the support assembly 22 extends toward the protective component 30 along the arrangement direction x. One end of the support assembly 22 is connected to the first wall 21, and the other end of the support assembly 22 is a free end and is arranged at an interval with the protective component 30.

In these optional examples, by this arrangement, when thermal runaway occurs, the protective component 30 impacted by the high-temperature and high-speed emissions is also supported by the support assembly 22. On the premise that requirements for thermal protection are taken into consideration, the size of the support assembly 22 can be appropriately reduced, thereby being conducive to reducing the loss of the energy density of the battery.

According to an example of the present application, as shown in FIG. 8, the support assembly 22 includes a plurality of first support elements 221.

In this example of the present application, the support assembly 22 includes a plurality of first support elements 221. The first support elements 221 protrude from the first wall 21 and extend toward the protective component 30. The plurality of first support elements 221 may be arranged at intervals, or at least two first support elements 221 are arranged in an intersected manner. At least one first support element 221 is overlapped with the pressure relief mechanism 105 in the arrangement direction x.

Specifically, the battery includes a plurality of battery cells 10. Each battery cell 10 is provided with a pressure relief mechanism 105. The plurality of first support elements 221 and the plurality of pressure relief mechanisms 105 are correspondingly arranged in the arrangement direction x. Alternatively, at least two first support elements 221 are arranged in an intersected manner, and a cross position 221a is arranged corresponding to the pressure relief mechanism 105 in the arrangement direction x.

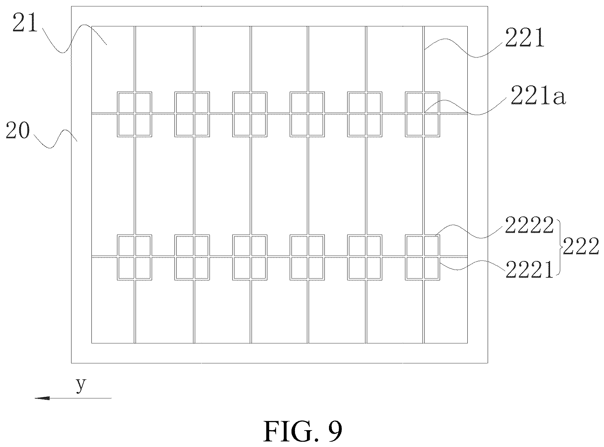

Referring to FIG. 9, FIG. 9 is a partial bottom view of a battery according to some examples of the present application.

According to an example of the present application, as shown in FIG. 3 and FIG. 9, at least two first support elements 221 are arranged in a cross manner. In the arrangement direction x, the cross position 221a of the two first support elements 221 is overlapped with the pressure relief mechanism 105.

Specifically, the first wall 21 has a rectangular structure and has a predetermined length and width. At least one first support element 221 extends along the length direction of the first wall 21, and at least one first support element 221 extends along the width direction of the first wall 21. At least two first support elements 221 are arranged in a cross manner. In the arrangement direction x, the cross position 221a of the two first support elements 221 is overlapped with the pressure relief mechanism 105.

Exemplarily, N first support elements 221 extend along the length direction of the first wall 21, and M first support elements 221 extend along the width direction of the first wall 21, so as to form M×N cross positions 221a. A corresponding battery includes M×N pressure relief mechanisms 105. In the arrangement direction x, each cross position 221a is overlapped with each pressure relief mechanism 105.

In these optional examples, by this arrangement, the density of the support assembly 22 in a region corresponding to the pressure relief mechanism 105 can be increased, thereby reducing the contact between the protective component 30 and the first wall 21, and also delaying the transfer of heat. In addition, the cross arrangement can bear relatively large thermal impact, increase the support strength for the protective component 30, and reduce the risk that the protective component 30 is impacted through, thereby reducing the risk that the box 20 is fused through.

According to an example of the present application, the support assembly 22 further includes a second support unit 222. The second support unit 222 is arranged on a circumferential side of the cross position 221a. In the arrangement direction x, the second support unit 222 is at least partially overlapped with the pressure relief mechanism 105.

In this example of the present application, the support assembly 22 further includes the second support unit 222, and the second support unit 222 is arranged on the circumferential side of the cross position 221a. It may be understood that the second support unit 222 may extend along a circumferential direction of the cross position 221a. The second support unit 222 may be in contact with the cross position 221a, or the cross positions 221a may also be arranged at an interval.

Optionally, the second support units 222 are arranged in a circle along the circumferential direction of the cross position 221a.

Specifically, the second support unit 222 adopts a ring structure.

In these optional examples, by this arrangement, the support strength for the pressure relief mechanism 105 can be further increased, thereby reducing the risk that the protective component 30 is impacted through.

According to an example of the present application, as shown in FIG. 3 and FIG. 9, the second support unit 222 includes two second support elements 2221 and two third support elements 2222. Each second support element 2221 is connected to two adjacent third support elements 2222. The two second support elements 2221 are spaced and oppositely arranged along a first direction y. The first direction y is perpendicular to the arrangement direction x.

In these optional examples, the second support element 2221 is connected to the third support element 2222. When the protective component 30 is subjected to thermal impact, the protective component 30 is in contact with the second support unit 222, the second support element 2221 may disperse the impact force applied to the second support element 2221 to the third support element 2222, and the third support element 2222 may disperse the impact force applied to the third support element 2222 to the second support element 2221, thereby reducing the risk that the protective component 30 is impacted through. In addition, the heat is transferred correlatively between the second support element 2221 and the third support element 2222 to delay the time for transferring the heat to the first wall 21, thereby reducing the risk that the box 20 is fused through.

According to an example of the present application, the support assembly 22 is connected to the protective component 30.

In this example of the present application, the support assembly 22 extends toward the protective component 30 along the arrangement direction x. One end of the support assembly 22 is connected to the first wall 21, and the other end of the support assembly 22 is connected to the protective component 30. The protective component 30 is connected to the first wall 21 through the support assembly 22, which may be understood as that the protective component 30 has a first surface and a second surface along a thickness direction, the first surface is connected to the support assembly 22, and the second surface is in contact with the battery cell 10, or the second surface and the battery cell 10 are arranged at an interval.

In these optional examples, by this arrangement, the mounting stability of the protective component 30 is improved, and the movement of the protective component 30 in the box 20 is reduced.

According to an example of the present application, a projection area S1 of the protective component 30 on the first wall 21 along the arrangement direction x and an area S2 of the first wall 21 satisfy: 60%S2≤S1≤95%S2.

In some examples of the present application, the ratio S1/S2 of the projection area S1 of the protective component 30 on the first wall 21 along the arrangement direction x to the area S2 of the first wall 21 is: 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, or within other ranges formed by any two of the foregoing end points.

Optionally, the projection area S1 of the protective component 30 on the first wall 21 along the arrangement direction x and the area S2 of the first wall 21 satisfy: 80%S2≤S1≤95%S2.

In these optional examples, by this arrangement, thermal protection of the first wall 21 by the protective component 30 can be further improved.

According to an example of the present application, the protective component 30 includes one of a mica paper, a mica plate, or a glass fiber plate.

In these optional examples, these specific optional protective components 30 can endow the protective component 30 with good thermal protection performance.

In a second aspect, the present application provides a power consuming apparatus. The power consuming apparatus includes the foregoing battery, and the battery is configured to provide electric energy.

According to some examples of the present application, referring to FIG. 3 to FIG. 9, the present application provides a battery. The battery includes a box 20, a battery cell 10, and a protective component 30. The box 20 includes a first wall 21 and a support assembly 22. The battery cell 10 is accommodated in the box 20, and a side of the battery cell 10 facing the first wall 21 is provided with a pressure relief mechanism 105. The protective component 30 is accommodated in the box 20 and separates the pressure relief mechanism 105 from the first wall 21. In the arrangement direction x of the first wall 21 and the protective component 30, at least part of the support assembly 22 is located between the first wall 21 and the protective component 30, and at least part of the protective component 30 is overlapped with the pressure relief mechanism 105. The protective component 30 is a mica plate. The support assembly 22 and the first wall 21 are integrally formed, and the support assembly 22 protrudes from the first wall 21 and faces the protective component 30. The projection area S1 of the protective component 30 on the first wall 21 along the arrangement direction x and the area S2 of the first wall 21 satisfy: 90%S2=S1. The support assembly 22 and the protective component 30 are arranged at an interval in the arrangement direction x. The support assembly 22 includes a plurality of first support elements 221 and a plurality of second support units 222. The plurality of first support elements 221 are arranged in a cross manner to form a plurality of cross positions 221a. In the arrangement direction x, the cross position 221a is overlapped with the pressure relief mechanism 105. The second support unit 222 is arranged along a circumferential direction of the cross position 221a. In the arrangement direction x, the second support unit 222 is at least partially overlapped with the pressure relief mechanism 105. The second support unit 222 includes two second support elements 2221 and two third support elements 2222. Each second support element 2221 is connected to two adjacent third support elements 2222. The two second support elements 2221 are spaced and oppositely arranged along a first direction y. The first direction y is perpendicular to the arrangement direction x.

According to the battery provided in the present application, high-temperature and high-speed emissions released by the battery cell 10 during thermal runaway act on the protective component 30, and the protective component 30 can reduce the thermal impact on the first wall 21 and reduce the heat transferred to the first wall 21, thereby reducing the risk that the first wall 21 is fused through. At least part of the support assembly 22 is located between the first wall 21 and the protective component 30, so that a thermal insulation air layer is formed between the first wall 21 and the protective component 30, thereby further reducing the heat transferred to the first wall 21. When thermal runaway occurs, the protective component 30 impacted by the high-temperature and high-speed emissions is supported by the support assembly 22, thereby reducing the direct contact between the first wall 21 and the protective component 30. Although the protective component 30 is in contact with the support assembly 22 to generate fusion, the support assembly 22 gradually fuses in a direction from the protective component 30 to the first wall 21, thereby delaying the time taken to transfer heat to the first wall 21, reducing the risk that the box 20 is fused through, and improving the reliability of the battery.

Although the present application has been described with reference to the preferred examples, various improvements may be made and parts therein may be replaced with equivalents without departing from the scope of the present application. In particular, the technical features mentioned in various examples can be combined in any manner as long as there is no structural conflict. The present application is not limited to the specific examples disclosed herein, but rather includes all technical solutions falling within the scope of the claims.

## Claims

1. A battery, comprising:
a box, comprising a first wall and a support assembly;
a battery cell, accommodated in the box, wherein a side of the battery cell facing the first wall is provided with a pressure relief mechanism; and
a protective component, accommodated in the box and separating the pressure relief mechanism from the first wall, wherein in an arrangement direction of the first wall and the protective component, at least part of the support assembly is located between the first wall and the protective component, the support assembly and the first wall are integrally formed, the support assembly protrudes from a surface of the first wall facing the protective component, and in the arrangement direction, at least part of the support assembly is overlapped with the pressure relief mechanism.

2. The battery according to claim 1, wherein
the support assembly and the protective component are arranged at an interval in the arrangement direction.

3. The battery according to claim 2, wherein
the support assembly comprises a plurality of first support elements.

4. The battery according to claim 3, wherein
at least two first support elements are arranged in a cross manner, and in the arrangement direction, a cross position of the two first support elements is overlapped with the pressure relief mechanism.

5. The battery according to claim 4, wherein
the support assembly further comprises a second support unit, the second support unit is arranged on a circumferential side of the cross position, and in the arrangement direction, the second support unit is at least partially overlapped with the pressure relief mechanism.

6. The battery according to claim 5, wherein
the second support unit comprises two second support elements and two third support elements, each second support element is connected to two adjacent third support elements, the two second support elements are spaced and oppositely arranged along a first direction, and the first direction is perpendicular to the arrangement direction of the first wall and the protective component.

7. The battery according to any one of claims 1 to 6, wherein
the support assembly is connected to the protective component.

8. The battery according to any one of claims 1 to 7, wherein
a projection area S1 of the protective component on the first wall along the arrangement direction and an area S2 of the first wall satisfy: 60%S2≤S1≤95%S2.

9. The battery according to any one of claims 1 to 8, wherein
the protective component comprises one of a mica paper, a mica plate, or a glass fiber plate.

10. A power consuming apparatus, comprising the battery according to any one of claims 1 to 9, wherein the battery is configured to provide electric energy.
